Europäisches Patentamt

European Patent Office

Office européen des brevets

(19)

(11) Veröffentlichungsnummer: **0 259 661**
**B1**

(12) **EUROPÄISCHE PATENTSCHRIFT**

(45) Veröffentlichungstag der Patentschrift:
19.09.90

(51) Int. Cl.⁵: **B23H 7/10**

(21) Anmeldenummer: 87111987.1

(22) Anmeldetag: 18.08.87

(54) Stromzuführung für eine Drahtelektrode einer Elektroerosionsmaschine.

(30) Priorität: 27.08.86 DE 3629004

(43) Veröffentlichungstag der Anmeldung:
16.03.88 Patentblatt 88/11

(45) Bekanntmachung des Hinweises auf die Patenterteilung:
19.09.90 Patentblatt 90/38

(84) Benannte Vertragsstaaten:
CH DE FR GB IT LI

(56) Entgegenhaltungen:
GB-A- 2 114 383

PATENT ABSTRACTS OF JAPAN, Band 10,
Nr. 88 (M-467)[2145], 5. April 1986; &
JP-A-60 228 027 (INOUE JAPAX KENKYUSHO
K.K.) 13-11-1985

(73) Patentinhaber: AG für industrielle Elektronik AGIE
Losone bei Locarno, CH-6616 Losone/Locarno(CH)

(72) Erfinder: Sciaroni, Boris, Via Vallemaggia 65b,
CH-6604 Locarno(CH)
Erfinder: Kilcher, Beat, Via Ronco 13,
CH-6611 Arcegno(CH)

(74) Vertreter: EGLI-EUROPEAN PATENT ATTORNEYS,
Widenmayerstrasse 5, D-8000 München 22(DE)

## Beschreibung

Der Erfindung bezieht sich auf eine Stromzuführung für eine Drahtelektrode gemäß dem Oberbegriff des Patentanspruches 1. Eine derartige Stromzuführung ist aus der DE-PS 26 53 857 bzw. der dazu parallelen US-PS 4 205 212 bekannt.

Die dort gezeigte Stromzuführung ist im Prinzip als Schleifkontakt ausgebildet, der in einen Drahtführungskopf integriert ist.

Um gute Schneidleistungen zu erhalten, wird die Drahtelektrode heute mit relativ hoher Geschwindigkeit bezogen auf ihre Längsachse bewegt. Auch werden Drahtelektroden verwendet, die eine verhältnismäßig rauhe Oberfläche haben, wodurch die Funkenbildung begünstigt wird.

Aus diesen beiden Faktoren ergibt sich jedoch bei einer als Schleifkontakt ausgebildeten Stromzuführung ein relativ hoher Abrieb bzw. Verschleiß, der insbesondere bei automatisch gesteuerten und nicht mehr ständig von Personen überwachten Maschinen zu Ausfällen führt.

Aufgabe der Erfindung ist es daher, die bekannte Stromzuführung dahingehend zu verbessern, daß sie bei guter elektrischer Kontaktgabe weitestgehend verschleißfrei ist.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Der Grundgedanke der Erfindung besteht darin, daß die elektrische Kontaktgabe durch ein elektrisch gut leitendes Fluid stattfindet. Dieses Fluid kann eine Flüssigkeit wie z.B. Quecksilber sein oder ein fließfähiges Pulver, wie z. B. Graphitpulver. Der elektrische Leitwert des Fluides liegt dabei in der Größenordnung von 0,125 (bei Graphit) bis 62,5 (bei Silber) m/Ohm mm². Natürlich können auch andere Pulver von Materialien mit guter elektrischer Leitfähigkeit wie z. B. Kupfer, Aluminium etc. verwendet werden. Die Partikelgröße und -form soll dann so gewählt werden, daß einerseits noch eine gute "Fließfähigkeit" gegeben ist, so daß die Kontaktfläche zwischen der Drahtelektrode und dem Pulver möglichst groß ist (in der Praxis werden Korngrößen von 10 bis 200 $\mu$m zweckmäßig sein) und weiterhin so, daß die elektrische Leitfähigkeit zwischen den Partikeln ausreichend groß ist, so daß die benötigte große Strom dichte des elektrischen Stromes ohne übermäßige Erwärmung erreicht wird.

Mit der Erfindung wird demnach eine praktisch vollkommen verschleißfreie Stromzuführung geschaffen. Es werden lediglich geringe Mengen des elektrisch leitfähigen Fluids verbraucht, die von der Drahtelektrode mitgerissen werden (der Verbrauch an Fluid liegt in der Praxis in der Größenordnung zwischen 1 mm³/h und cm³/h). Diese können ohne weiteres nachgefüllt werden, sei es automatisch aus einem größeren Vorratsbehälter oder sei es in regelmäßigen Intervallen von Hand.

Diesen Verbrauch von Fluid kann man mit den Merkmalen des Anspruches 4 noch weiter reduzieren, da die Dichtung als Abstreifer für das Fluid wirkt.

Der Verbrauch des Fluides hängt auch von dessen Benetzungseigenschaften ab und ist um so geringer, je schlechter die Benetzungseigenschaften sind. Sie sind beispielsweise bei Quecksilber relativ schlecht, was hier sehr günstig ist, da nur geringe Quecksilbermengen von der Drahtelektrode mitgerissen werden.

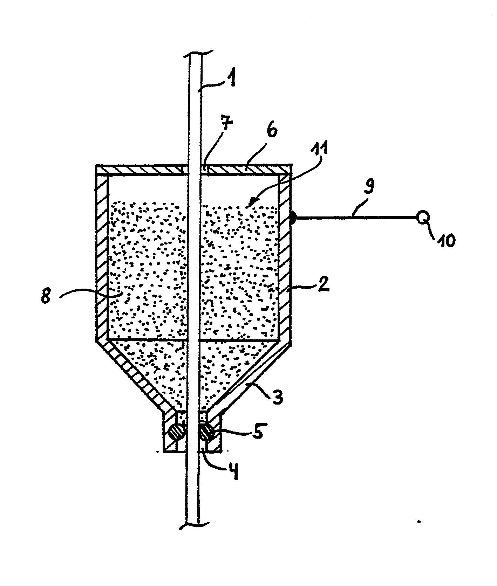

Im folgenden wird die Erfindung anhand eines Ausführungsbeispieles im Zusammenhang mit der Zeichnung erläutert.

Die einzige Figur zeigt einen schematischen Querschnitt der Stromzuführung nach der Erfindung.

Eine draht- oder bandförmige Drahtelektrode 1 läuft durch einen Behälter 2 hindurch. Dieser Behälter ist hier im wesentlichen zylindrisch und läuft an seinem unteren Ende 3 konisch spitz zu, wo er eine Öffnung 4 besitzt. Im Bereich der Öffnung 4 ist eine Dichtung 5 angebracht, die beispielsweise die Form eine O-Ringes hat, der die Drahtelektrode 1 umgibt. Natürlich können auch andere Arten von Dichtungen verwendet werden, wie z. B. Gummilippen oder sonstige Abstreifer. Die Oberseite des Behälters 2 ist durch einen Deckel 6 verschlossen, der eine Eintrittsöffnung 7 für die Drahtelektrode 1 hat.

Der Behälter 2 ist mit einem elektrisch gut leitenden Fluid 8 gefüllt, das beispielsweise Quecksilber oder ein fließfähiges Pulver wie beispielsweise Graphitpulver ist. Dieses Fluid verbindet damit elektrisch die Innenwandung des Behälters 2 mit der Drahtelektrode 1 und umschließt letztere vollständig, so daß eine große Kontaktfläche gegeben ist. An den Behälter 2 ist eine elektrische Zuleitung 9 angeschlossen, beispielsweise angelötet, wobei das Ende 10 dieser Leitung 9 an einen Pol einer Erosionsenergiequelle bekannter Bauart angeschlossen ist.

Der Behälter 2 ist im wesentlichen mit dem Fluid 8 gefüllt. Er muß jedoch nicht vollständig gefüllt sein, wie durch den Fluidpegel 11 angedeutet.

Wie aus der einzigen Figur ersichtlich ist, erfolgt die elektrische Kontaktgabe ausschließlich durch das Fluid 8, d. h. es besteht kein direkter Kontakt zwischen der Drahtelektrode 1 und dem Behälter 2. Hierdurch kann zwischen diesen Teilen auch kein mechanischer Verschleiß auftreten.

Sämtliche in den Patentansprüchen, der Beschreibung und der Zeichnung dargestellten technischen Einzelheiten können sowohl für sich als auch in beliebiger Kombination miteinander erfindungswesentlich sein.

## Patentansprüche

1. Stromzuführung für eine Drahtelektrode (1) einer Elektroerosionsmaschine mit einem Behälter (2), durch dessen beidseitige Öffnungen (4, 7) die Drahtelektrode (1) hindurchgeführt ist, wobei der Behälter (2) elektrisch mit einer Erosionsenergiequelle verbunden ist und ein elektrisch leitendes Fluid (8) enthält, dadurch gekennzeichnet, daß das Fluid (8) ein gut leitendes, fließfähiges Pulver ist.

2. Stromzuführung nach Anspruch 1, dadurch gekennzeichnet, daß das fließfähige Pulver Graphitpulver ist.

3. Stromzuführung nach einem der Ansprüche 1 bis 2, dadurch gekennzeichnet, daß der Behälter (2) an seiner Unterseite (3) konisch spitz zuläuft und an seiner unteren Öffnung (4) eine die Drahtelektrode (1) ringsumgebende Dichtung (5) aufweist.

## Claims

1. A current feeder for a wire electrode (1) of an electroerosion machine, having a receptacle (2) with openings (4, 7) on both sides through which the wire electrode (1) is guided, the receptacle (2) being electrically connected to a source of erosion energy and containing an electrically conductive fluid (8), characterized in that the fluid (8) is a highly-conductive powder capable of flowing.

2. A current feeder in accordance with Claim 1, characterized in that the powder, which is capable of flowing, is graphite powder.

3. A current feeder in accordance with any one of Claims 1 to 2, characterized in that the lower side (3) of the receptacle (2) conically tapers to a point and the lower opening (4) of the receptacle has a seal (5) surrounding the wire electrode (1) all the way round.

## Revendications

1. Amenée de courant pour le fil-électrode (1) d'une machine d'électro-érosion comprenant un récipient (2) que traverse le fil-électrode (1) par des ouvertures (4, 7) aménagées sur deux côtés, amenée dans laquelle le récipient (2) est relié électriquement à une source d'énergie d'érosion et contient un fluide (8) électroconducteur, caractérisée en ce que le fluide (8) est une poudre fluide bonne conductrice.

2. Amenée de courant selon la revendication 1, caractérisée en ce que la poudre fluide est une poudre de graphite.

3. Amenée de courant selon l'une des revendications 1 à 2, caractérisée en ce que le récipient (2) se termine en pointe conique sur sa face inférieure (3) et présente à son ouverture inférieure (4) un joint d'étanchéité (5) entourant le fil électrode (1) à la manière d'un anneau.